# EUROPEAN PATENT SPECIFICATION

(11) **EP 4 493 199 B1**
(45) Date of publication and mention of the grant of the patent: **19.11.2025**
(21) Application number: 23710766.9
(22) Date of filing: 15.03.2023
(51) Int. Cl.: A61K 35/12, B01D 15/16, B01D 15/36, B01D 15/38, C07K 14/47

(54) **METHODS AND COMPOSITIONS FOR PURIFYING SMALL EXTRACELLULAR VESICLES**
VERFAHREN UND ZUSAMMENSETZUNGEN ZUR REINIGUNG KLEINER EXTRAZELLULÄRER VESIKEL
MÉTHODES ET COMPOSITIONS DE PURIFICATION DE PETITES VÉSICULES EXTRACELLULAIRES

(30) Priority: 18.03.2022 EP 22163007
(43) Date of publication of application: 22.01.2025
(73) Proprietor: Merck Patent GmbH, 64293 Darmstadt (DE)
(72) Inventor: BEST, Tatjana, 64293 DARMSTADT (DE); WUESTENHAGEN, Elena, 64293 DARMSTADT (DE); RAMMO, Oliver, 64293 DARMSTADT (DE)
(74) Representative: Merck Patent Association
(86) International application number: PCT/EP2023/056537
(87) International publication number: WO 2023/174965

(56) References cited:
- WO-A1-2020/191369
- WO-A1-2021/062290
- WO-A1-2021/062317
- WO-A1-2021/092193

## Description

The present invention relates methods for purifying small extracellular vesicles by cation exchange mixed mode chromatography.

Small extracellular vesicles are small lipid bilayer vesicles. They are formed within the intracellular space and secreted by the cell. They typically range between 50 to 150 nm in diameter. Their globular lipid bilayer highly enriched in various proteins like tetraspanins. They display on their surface a complex glycosylation pattern with specific glycoconjugates. Exemplary small extracellular vesicles are exosomes.

Small extracellular vesicles can carry small biomolecules such as proteins, lipids, and nucleic acids. The composition and cargo of small extracellular vesicles vary depending on the parenteral cell and biological state. In recent years, the interest in exosomes for diagnostic and therapeutic applications has increased. In clinical diagnostics, exosomes can prove their worth in the field of liquid biopsy for the research of biomarkers to detect diseases in body fluids. But they are also coming into focus for therapeutic purposes. Due to their advantages over artificial nanoparticles, they are ideally suited for drug delivery. Exosomes are of natural origin, they originate from the endosomal system and appear to have low toxicity and less immunogenicity. Their surface and loading can be adapted to be cell- or target-specific. Native exosomes are intrinsically bioactive, therefore the use in cancer immunotherapy or regenerative medicine is conceivable. In ongoing preclinical studies with exosomes, bulk isolates are deployed. These isolates are very heterogeneous in their composition and cargo, so currently, the full therapeutic potential of exosomes is unfortunately unutilized.

Subpopulation separation is currently feasible with density gradients, immunoabsorbent methods, and affinity beads. These methods are either not scalable or have limitations regarding purity and yield. The heterogeneity in the content of exosomes could necessitate the separation of subpopulations to enhance the therapeutic efficacy and reduce unwanted side effects. Consequently, it is required to develop a large-scale purification method for subpopulations of exosomes.

WO2019/241836 discloses the use of certain surfaces with polymers comprising anionic or electron rich groups for the binding of exosomes.

WO2020/191369 discloses the use of combined ion exchange purification steps for the purification of extracellular vesicles. Mixed mode chromatography is also mentioned but always in combination with several other ion exchange chromatography steps.

It has now been found that mixed mode cation exchange chromatography is especially efficient in purifying exosomes from process related impurities like host cell proteins as well as for the separation of subpopulations of exosomes. No further ion exchange chromatography steps are needed. Especially suitable is the use of a pH gradient.

The present invention is thus directed to a method for purifying small extracellular vesicles like exosomes comprising the steps of
a) contacting the sample comprising the small extracellular vesicles with a mixed mode cation exchange chromatography matrix. Said chromatography matrix comprises cation exchange and hydrophobic groups.
b) optionally washing the chromatography matrix
c) eluting small extracellular vesicles which bound to the chromatography matrix in step a) with an elution buffer, whereby the pH of the elution buffer is raised stepwise or as gradient from a pH between 4 and 7 to a pH of 8.5 or more.

In a preferred embodiment the pH is raised as a linear gradient.

In another embodiment, the method includes recovering small extracellular vesicles which flow through the chromatography matrix without binding to it.

In a preferred embodiment the chromatography matrix is a membrane or a monolith.

In a very preferred embodiment the chromatography matrix is a membrane, especially a hydrogel membrane.

In another preferred embodiment, elution in step c) is performed with a linear pH gradient from a pH between 4 and 7 to a pH between 8.5 and 10 while conductivity is kept at a constant level, and two or more fractions are eluted in different pH ranges comprising different subpopulations of small extracellular vesicles. For example, one fraction comprising a frist subpopulation is eluted at a pH between 7 and 8 and another subpopulation is eluted at a pH between 8 and 9.

In another preferred embodiment the small extracellular versicles are exosomes.

The present invention is further directed to a method for purifying small extracellular vesicles from cell culture supernatants by isolating and/or purifying the small extracellular vesicles by contacting them with a mixed mode cation exchange chromatography matrix according to the method of the present invention.

In one embodiment, the method of the present invention comprises one or more of the following steps:
- Clarification
- filtration
- dialysis/ diafiltration
- tangential flow filtration
- treatment with nuclease, e.g. RNase and/or DNase
- treatment with chloroform
- ion exchange chromatography
- affinity chromatography
- hydrophobic interaction chromatography
- centrifugation
- PEG precipitation

Before describing the present invention in detail, it is to be understood that this invention is not limited to specific compositions or process steps, as such may vary. It must be noted that, as used in this specification and the appended claims, the singular form "a", "an" and "the" include plural referents unless the context clearly dictates otherwise. Thus, for example, reference to "a ligand" includes a plurality of ligands and reference to "an antibody" includes a plurality of antibodies and the like.

Unless defined otherwise, all technical and scientific terms used herein have the same meaning as commonly understood by one of ordinary skill in the art to which this invention is related. The following terms are defined for purposes of the invention as described herein.

Small extracellular vesicles (EVs) are nanosized, cell-derived particles, released by nearly all cell types. They are small lipid bilayer vesicles and have a diameter between 20 and 200 nm, preferably between 50 and 150 nm. Depending on their biogenesis and size, EVs can commonly be divided in three subgroups: exosomes, microvesicles and apoptotic bodies. Microvesicles, in contrast to exosomes, are formed by outward blebbing of the cell membrane. However, exosomes and microvesicles overlap in size and cannot always be clearly distinguished easily. Therefore, exosomes and microvesicles are often also referred to as small EVs (sEVs) and were used exchangeable.

Typically a sample comprises two or more different subpopulations of small extracellular vesicles. Such subpopulations differ in their composition, for example the glycosylation pattern and their surface protein pattern, and/or their cargo. The small EVs can be native or engineered.

As used herein, the term "cell" or "cell line" refers to a single cell or to a population of cells. The cells may be capable of continuous or prolonged growth and division in vitro. In some embodiments, e.g. the terms "HEK293 cells", "293 cells" or their grammatical equivalents are used interchangeably here and refer to the host/packing cell line used in the methods disclosed herein. The cells may also originate from organisms such as animals, human subjects and may include tissue cells blood cells or others.

Suitable cells and cell lines have been described for use in production of exosomes. The cells themselves may be selected from any biological organism, including prokaryotic (e.g., bacterial) cells and eukaryotic cells including insect cells, yeast cells and mammalian cells. Particularly desirable host cells are selected from among any mammalian species, including, without limitation primary cells like mesenchymal stem cells (MSCs), keratinocytes, primary fibroblasts, hepatocytes and myoblast cells derived from mammals including human, monkey, mouse, rat, rabbit, and hamster, or cell lines like A549, WEHI, 3T3, 10T1/2, BHK, MDCK, COS 1, COS 7, BSC 1, BSC 40, BMT 10, VERO, WI38, HeLa, a HEK 293 cell, Saos, C2C12, L cells, HT1080, and HepG2.

Purification means to increase the degree of purity of a target molecule, in this case exosomes, e.g. by removing one or more impurities.

The term "impurity" or "contaminant" as used herein, refers to any foreign or objectionable molecules or species, including biological macromolecules such as DNA, RNA, one or more host cell proteins, nucleic acids, endotoxins, lipids, impurities of synthetic origin like detergents as well as one or more additives which may be present in a sample containing the exosomes to be purified and thus to be separated from one or more of the impurities.

As used herein, and unless stated otherwise, the term "sample" refers to any composition or mixture that contains exosomes. Samples are preferably liquid samples comprising the exosomes. Samples may be derived from biological or other sources. Biological sources include eukaryotic and prokaryotic sources, such as plant and animal cells, tissues and organs. The sample may also include diluents, buffers, detergents, and contaminating species, debris and the like that are found mixed with the target molecule, i.e. the small extracellular vesicles. The sample may be "partially purified" (i.e., having been subjected to one or more purification steps, such as filtration steps) or may be obtained directly from an organism or cell producing the small extracellular vesicles, e.g., the sample may comprise harvested cell culture fluid.

The terms "purifying," "separating," or "isolating," as used interchangeably herein, refer to increasing the degree of purity of the target exosomes from a composition or sample comprising the target exosomes and one or more impurities and/or non-target exosomes.

The term "chromatography" refers to any kind of technique which separates an analyte of interest (e.g. a target exosome) from other molecules present in a sample. Usually, the target exosome is separated from other molecules as a result of differences in rates at which the individual molecules of the mixture bind to and/or migrate through a chromatography matrix under the influence of a moving phase.

The term "matrix" or "chromatography matrix" are used interchangeably herein and refers to a solid phase through which the sample migrates in the course of a chromatographic separation. The matrix typically comprises a base material and ligands covalently bound to the base material. The matrix of the present invention preferrably comprises or consists of particles, a membrane or a monolith, preferably the base material is a membrane or monolith, most preferred a membrane.

A "ligand" is a functional group that is part of the chromatography matrix, typically it is attached to the base material of the matrix, and that determines the binding properties and interaction properties of the matrix. Examples of "ligands" include, but are not limited to, ion exchange groups, hydrophobic interaction groups, hydrophilic interaction groups, thiophilic interactions groups, metal affinity groups, affinity groups, bioaffinity groups, and mixed mode groups (combinations of the aforementioned). It is also possible that one ligand has more than one binding / interaction property.

The matrix of the present invention comprises at least cation exchange groups and hydrophobic interaction groups. It is a mixed mode cation exchange chromatography matrix. The cation exchange groups may for example be strong cation exchange groups, like sulfonic acid groups. They may also be weak cation exchange groups, such as carboxymethyl or carboxylic acids. Examples of hydrophobic interaction groups are hydrophobic groups like phenyl, butyl, propyl, hexyl. The matrix may comprise two or more different cation exchange groups, e.g. weak and strong cation exchange groups. It may also comprise two or more different hydrophobic interaction groups. It may additionally comprise further other types of ligands. The groups may be part of the base material, they may also be part of a ligand. One ligand may comprise one or several different cation exchange and/or hydrophobic groups.

The ligands can be attached to the base material of the matrix by any type of covalent attachment. Covalent attachment can for example be performed by directly bonding the functional groups to suitable residues on the base material like OH, NH2, carboxyl, phenol, anhydride, aldehyde, epoxide or thiol etc.. It is also possible to attach the ligands via suitable linkers. It is also possible to generate the matrix by polymerizing monomers comprising the ligands and a polymerizable moiety. Examples of matrices generated by polymerization of suitable monomers are polystyrene, polymethacrylamide or polyacrylamide based matrices generated by polymerizing suitable styrole or acryloyl monomers.

In another embodiment the chromatography matrix can be generated by grafting the ligands onto the base material or from the base material. For grafting from processes with controlled free-radical polymerisation, such as, for example, the method of atom-transfer free-radical polymerisation (ATRP), are suitable. A very preferred one-step grafting from polymerisation reaction of acrylamides, methacrylates, acrylates, methacrylates etc. which are functionalized e.g. with ionic, hydrophilic or hydrophobic groups can be initiated by cerium(IV) on a hydroxyl-containing support, without the support having to be activated.

When the chromatography matrix is used in a chromatographic separation it is typically used in a separation device, also called housing, as a means for holding the matrix.

In one embodiment, the device comprises a housing with an inlet and an outlet and a fluid path between the inlet and the outlet. In a preferred embodiment the device is a chromatography column. Chromatography columns are known to a person skilled in the art. They typically comprise cylindrical tubes or cartridges filled with the stationary phase as well as filters and/or means for fixing the stationary phase in the tube or cartridge and optionally connections for solvent delivery to and from the tube or cartridge. The size of the chromatography column varies depending on the application, e.g. analytical or preparative. In one embodiment the column or generally the separation device is a single use device.

A "buffer" is a solution that resists changes in pH by the action of its acid-base conjugate components. Various buffers which can be employed depending, for example, on the desired pH of the buffer are described in Buffers. A Guide for the Preparation and Use of Buffers in Biological Systems, Gueffroy, D., ed. Calbiochem Corporation (1975). Non- limiting examples of buffers include MES, MOPS, MOPSO, Tris, HEPES, phosphate, acetate, citrate, succinate, and ammonium buffers, as well as combinations of these.

According to the present invention the term "buffer" or "solvent" is used for any liquid composition that is used to load, wash, elute, re-equilibrate, strip and/or sanitize the chromatography matrix.

When "loading" a chromatography column in bind and elute mode, the sample or composition comprising the target molecule and one or more impurities is loaded onto a chromatography column. In preparative chromatography, the sample is preferably loaded directly without the addition of a loading buffer. If a loading buffer is used, the buffer has a composition, a conductivity and/or pH such that the target exosome is bound to the stationary phase while ideally all the impurities like the host cell proteins are not bound and flow through the column. Typically, the loading buffer, if used, has the same or similar composition as the equilibration buffer used to prepare the column for loading.

The final composition of the sample loaded on the column is called feed. The feed may comprise the sample and the loading buffer but preferably it is only the sample.

By "wash" or "washing" a chromatography matrix is meant passing an appropriate liquid, e.g. a buffer through or over the matrix. Typically washing is used to remove weakly bound impurities from the matrix in bind/elute mode prior to eluting the target molecule. Additionally, wash steps can be used to reduce levels of residual detergents, enhance viral clearance and/or alter the conductivity carryover during elution.

To "elute" a molecule (e.g. the target exosomes) from a matrix means that the molecule is removed therefrom. Elution may take place by altering the solution conditions such that a buffer different from the loading and/or washing buffer competes with the molecule of interest for the ligand sites on the matrix or alters the equilibrium of the target molecule between stationary and mobile phase such that it favors that the target molecule is preferentially present in elution buffer.

A non-limiting example is to elute a molecule from an ion exchange resin by altering the ionic strength of the buffer surrounding the ion exchange material such that the buffer competes with the molecule for the charged sites on the ion exchange material. Alternatively, a pH change is also suitable.

The terms "flow-through process", "flow-through mode", and "flow-through operation", as used interchangeably herein, refer to a chromatographic process in which at least one target molecule (e.g. an exosome) contained in a sample along with one or more impurities is intended to flow through a chromatography matrix, which usually binds one or more impurities, where the target molecule usually does not bind (i.e., flows through) and is eluted from the chromatograph matrix with the loading buffer.

The terms "bind and elute mode" and "bind and elute process", as used herein, refer to a separation technique in which at least one target molecule contained in a sample (e.g. an exosome) binds to a suitable chromatography matrix and is subsequently eluted with a buffer different from the loading buffer.

The term "ionic density" as used herein, refers to number of ions per unit of volume or mass of a given separation material, more particularly, the number of ions of given type (e.g. positive ions or negative ions) per unit volume or mass of separation material. Usually the number of ions is estimated titrating the given separation material. Moreover, the amount of the ions is given in equivalents (eq) per mass or volume unit for separation material.

The term "conductivity" as used herein, refers to an inherent property of most materials, that quantifies how strongly it resists or conducts electric current. In aqueous solutions, such as buffers, the electrical current is carried by charged ions. The conductivity is determined by the number of charged ions, the amount of charge they carry and how fast they move. Hence, for most aqueous solutions, the higher the concentration of dissolved salts, the higher the conductivity. Raising the temperature enables the ions to move faster, hence increasing the conductivity. Typically, the conductivity is defined in room temperature, if not otherwise indicated. The basic unit of conductance is Siemens (S). It is defined as the reciprocal of the resistance in Ohms, measured between the opposing faces of a 1 cm cube of liquid. Therefore, the values are estimated in S/cm.

Log reduction is a measure of how thoroughly a purification process reduces the concentration of a contaminant. It is defined as the common logarithm of the ratio of the levels of contamination before and after the process, so an increment of 1 corresponds to a reduction in concentration by a factor of 10. In general, an n-log reduction means that the concentration of remaining contaminants is only 10-n times that of the original. So for example, a 0-log reduction is no reduction at all, while a 1-log reduction corresponds to a reduction of 90 percent from the original concentration, and a 2-log reduction corresponds to a reduction of 99 percent from the original concentration.

A membrane as chromatographic matrix can be distinguished from particle-based chromatography by the fact that the interaction between a solute, e.g. the target exosomes or contaminants, and the matrix does not take place in the dead-ended pores of a particle, but mainly in the throughpores of the membrane. Exemplary types of membranes are flat sheet systems, stacks of membranes, microporous polymer sheets with incorporated cellulose, polystyrene or silica-based membranes as well as radial flow cartridges, hollow fiber modules and hydrogel membranes. Preferred are hydrogel membranes. Such membranes comprise a membrane support and a hydrogel formed within the pores of said support. The membrane support provides mechanical strength to the hydrogel. The hydrogel determines the properties of the final product, like pore size and binding chemistry.

The membrane support can consist of any porous membrane like polymeric membranes, ceramic based membranes and woven or non-woven fibrous material. Suitable polymeric materials for membrane supports are cellulose or cellulose derivatives as well as other preferably inert polymers like polyethylene, polypropylene, polybutylenterephthalate or polyvinylidene-difluoride.

The hydrogels can be formed through in-situ reaction of one or more polymerizable monomers with one or more crosslinkers and/or one or more cross-linkable polymers to form a cross-linked gel that has preferably macropores. Suitable polymerizable monomers include monomers containing vinyl or acryl groups. Preferred are monomers comprising an additional functional group that either directly forms the ligand of the matrix or is suitable for attaching the ligands. Suitable crosslinkers are compounds containing at least two vinyl or acryl groups. Further details about suitable membrane supports, monomers, crosslinkers etc. as well as suitable production conditions can be found in WO04073843 and WO2010/027955. Especially preferred are membranes made of an inert, flexible fiber web support comprising assembly within and around the fiber web support a porous polyacrylamide hydrogel with cation exchange as well as hydrophobic groups, like Natrix^{®} type membranes, Merck KGaA, Germany. Further details about suitable hydrogel mixed mode membranes can be found in WO2014018635.

Depending on the membrane device used, the respective processes are conducted by different operating principles like dead-end operation, cross-flow operation and radial flow operation systems. Dead-end operation is preferred.

Examples of suitable membranes to be used in the method of the present invention are
- Membranes with a polyethersulfone (PES)-based support and a cross-linked polymeric coating, functionalized with suitable ligands, like Mustang^{®} type membranes, Pall.
- Membranes made of stabilized reinforced cellulose, functionalized with suitable ligands, like Sartobind^{®} type membranes, Sartorius.
- Membranes made of stabilized reinforced cellulose, comprising a hydrogel with suitable ligands, like Sartobind^{®} Jumbo Membranes, Sartorius, made of stabilized reinforced cellulose
- Membranes made of a fine fiber non-woven scaffold comprising a hydrogel with suitable ligands, like 3SM^{™} Emphaze^{™} Hybrid Purifier type membranes, 3M.
- Membranes made of an inert, flexible fiber web support comprising within and around the fiber web support a porous polyacrylamide hydrogel with suitable cation exchange and hydrophobic ligands, like Natrix^{®} type Chromatography membranes, Merck KGaA, Germany.

A monolith or a monolithic sorbent, similar to a membrane, has throughpores, like interconnected channels, so that liquid can flow from one side of the monolith, through the monolith, to the other side of the monolith.

Since the mobile phase is flowing through these throughpores, molecules to be separated are transported by convection rather than by diffusion. Due to their structure monolithic sorbents show flow rate independent separation efficiency and dynamic capacity.

The monolith is typically formed in situ from reactant solutions and can have any shape or confined geometry, typically with frit-free construction, which guarantees convenience of operation. Preferably, monolithic materials have a binary porous structure, mesopores and macropores. The micron-sized macropores are the throughpores and ensure fast dynamic transport and low backpressure in applications; mesopores contribute to sufficient surface area and thus high loading capacity.

The monoliths can be made of organic, inorganic or organic/inorganic hybrid materials. Preferred are organic polymer based monoliths.

The synthesis of organic polymer monoliths is typically done by a one-step polymerization providing a tunable porous structure with tailored functional groups. Generally, a pre-polymerization mixture consisting of the monomers, crosslinkers, porogenic solvents, and initiators in an appropriate ratio is polymerized in a suitable container, also called mould, determining the format of the monolith. Polymerization is typically initiated by heating, use of UV radiation, microwave or γ-ray radiation in the presence of initiators. After reaction for the prescribed time at an appropriate temperature, the resulting material is typically washed with solvents to remove unreacted components and porogenic solvents.

Suitable organic polymers are polymethacrylates, polyacrylamides, polystyrenes, polyurethanes, etc., like Poly(methacrylic acid-ethylene dimethacrylate), Poly(glycidyl methacrylate-ethylene dimethacrylate) or Poly(acrylamide-vinylpyridine-N,N'-methylene bisacrylamide).

Inorganic monoliths can be made of silica or other inorganic oxides. Preferably they are made of silica. Silica monoliths are normally prepared via a sol-gel method with phase separation. This mainly includes hydrolysis, condensation, and polycondensation of silica precursors. Typically, tetraethoxysilane (TEOS) or tetramethylorthosilicate (TMOS) is distributed in a suitable solvent in the presence of a porogen (e.g. poly(ethylene glycol) (PEG)), followed by the addition of a catalyst, acid or base, or a binary catalyst, acid and base in sequence. After reaction for a prescribed time, the resulting gel-like product is washed with solvents to remove unreacted precursor, porogen, and catalyst, followed by the proper post treatment, typically a heat treatment.

The monoliths can be modified with suitable functional groups, in the present case cation exchange groups and hydrophobic interaction groups, to generate the targeted interaction with the sample comprising the target molecule and thus the targeted separation.

Typically the monoliths are contained in a housing like a column.

Membranes and monoliths can also be produced by 3D printing processes.

Particulate base materials can be prepared, for example, from organic polymers. Organic polymers of this type can be polysaccharides, such as agarose, dextranes, starch, cellulose, etc., or synthetic polymers, such as poly(acrylamides), poly(methacrylamides), poly(acrylates), poly(methacrylates), hydrophilically substituted poly(alkyl allyl ethers), hydrophilically substituted poly(alkyl vinyl ethers), poly(vinyl alcohols), poly(styrenes) and copolymers of the corresponding monomers. These organic polymers can preferably also be employed in the form of a crosslinked hydrophilic network. This also includes polymers made from styrene and divinylbenzene, which can preferably be employed, like other hydrophobic polymers, in a hydrophilized form.

Alternatively, inorganic materials, such as silica, zirconium oxide, titanium dioxide, aluminium oxide, etc., can be employed as particulate base materials. It is equally possible to employ composite materials, i.e., for example, particles which can themselves be magnetised by copolymerisation of magnetisable particles or of a magnetisable core. It is also possible to use core shell materials whereby the shell, i.e.at least the surface or a coating, has OH groups.

However, preference is given to the use of hydrophilic base materials which are stable to hydrolysis or can only be hydrolysed with difficulty since the materials according to the invention should preferably withstand alkaline cleaning or regeneration at e.g. basic pH over an extended use duration.

The base matrix may consist of irregularly shaped or spherical particles, whose particle size can be between 2 and 1000 µm. Preference is given to average particle sizes between 3 and 300 µm, in a most preferred embodiment the average particle size is between 20 - 63 µm.

The particulate base material may, in particular, be in the form of nonporous or preferably porous particles. The average pore sizes can be between 2 and 300 nm. Preference is given to pore sizes between 5 and 200 nm, most preferred average pore size is between 40 - 110 nm.

In a very preferred embodiment, the particulate base material is formed by copolymerisation of a hydrophilically substituted alkyl vinyl ether selected from the group of 1,4-butanediol monovinyl ether, 1,5-pentanediol monovinyl ether, diethylene glycol monovinyl ether or cyclohexanedimethanol monovinyl ether and divinylethyleneurea (1,3-divinylimidazolin-2-one) as crosslinking agent.

An example of a suitable commercially available vinylether based base material is Eshmuno^{®}, Merck KGaA, Germany.

Preferred particulate matrices are matrices with weak cation exchange, strong cation exchange and hydrophobic groups, e.g. with sulfonic acid, carboxylic acid and phenyl groups, like Eshmuno ^{®} HCX, Merck KGaA, Germany. Also preferred is a particulate chromatography matrix comprising of a hydroxyl group containing base material, preferably a vinylether based base material, to the surfaces of which polymer chains are grafted by covalent bonding, characterised in that
a) the polymer chains are covalently bonded to the base matrix via the hydroxyl groups,
b) the polymer chains comprise end groups -N(Y)-R3 with Y being independently from each other H or CH₃, preferably H, and R3 being -CHCOOMR4
with R4 being C1 to C4 alkyl, like methyl, ethyl, propyl, isopropyl, butyl, isobutyl, preferably isopropyl and isobutyl, very preferred isobutyl, or C1 to C4 perfluoroalkyl
and M being independently from each other H, Na, K, or NH₄⁺.
An example is Eshmuno ^{®} CMX, Merck KGaA,

The base material may equally also be in the form of fibres, hollow fibres or coatings.

The present invention provides methods of separating or purifying small extracellular vesicles. This means that one or more subpopulation of small extracellular vesicles can be separated from one or more other subpopulations of small extracellular vesicles and/or from other impurities in a sample. Preferably at least one small extracellular vesicle is separated from at least one impurity, especially DNA, and from at least one other subpopulation of small extracellular vesicles. It has been found a chromatographic separation on a mixed mode cation exchange chromatography matrix which comprises at least one type of cation exchange groups and one type of hydrophobic groups using a pH change for elution is suitable to separate even subpopulations small extracellular vesicles. It is assumed that different glycosylation pattern, different surface protein pattern and/or different cargo within the vesicles results in slight differences in charge of the vesicles. Unexpectedly such minimal differences are sufficient to result in fractionated elution when a pH gradient is applied to a mixed mode cation chromatography matrix.

By the methods of the invention, small extracellular vesicles, preferably exosomes, can be separated, enriched and/or purified enabling an efficient separation. In particular aspects of the invention, target exosomes can be separated from impurities and other non-target exosomes in one chromatographic step. A high-resolution separation can be achieved and subpopulations of different exosome species can be isolated. It was found that the method of the present invention is especially suitable to separate exosomes from process related impurities like DNA and host cell proteins. In addition, it was found that cation exchange mixed mode chromatography is suitable to separate exosomes preferably based on their glycosylation rate. The higher the glycosylation rate on the surface of an exosome, the higher the interaction of the exosome with the chromatographic matrix which is leading to higher retention on the chromatographic matrix. Especially good results can be obtained with membrane based chromatography matrices.

The production of cells comprising small extracellular vesicles is known to a person skilled in the art. Typically, the selected cells are expanded in suitable culture media in a bioreactor under suitable conditions. The cells may be grown as adherent or suspension culture.

In an embodiment, the present disclosure provides a method for manufacturing exosomes comprising the steps of (i) culturing cells in a bioreactor, (ii) iv) isolating and/or purifying the exosomes whereby step iv) comprises a chromatographic purification on a mixed mode cation exchange chromatography matrix. The exosomes might be native or engineered exosomes.

Optionally, after cell harvesting the obtained mixture is first filtered and/or centrifuged.

In one embodiment the mixture is filtered through a filter that removes large molecule contaminants and cellular debris but that permits small extracellular vesicles to pass therethrough.

In one embodiment, the released small extracellular vesicles can be separated and purified from the cell culture medium using clarification. Clarification can be a microfiltration process in which relatively larger components such as lysed cells and/or impurities are removed from a solution. Clarification filters include depth filtration, charged depth filtration and similar microfiltration techniques.

Tangential flow filtration can be used to concentrate the mixture of purified small extracellular vesicles and to remove salts and proteins.

Tangential flow filtration (TFF) refers to a generally rapid and efficient method for filtration or purification of a solution containing target product and/or impurities during which a solution or liquid stream flows parallel to a filtering membrane.

Centrifugation can for example be a low speed centrifugation to remove larger particles like cellular debris. This can be for example done at 10000 to 12000 g for 10 to 30 minutes. The released small extracellular vesicles can be found in the supernatant.

The isolation and/or purification of the small extracellular vesicles typically includes one or more of the following process steps:
- Clarification
- filtration
- dialysis/ diafiltration
- tangential flow filtration
- treatment with nuclease, e.g. RNase and/or DNase
- treatment with chloroform
- ion exchange chromatography
- affinity chromatography
- hydrophobic interaction chromatography
- centrifugation
- PEG precipitation

In some embodiments, a nuclease, typically an endonuclease, is added, e.g. to reduce the amount of host cell DNA. It can be added directly to the mixture in the bioreactor. The nuclease may be one that degrades both DNA and RNA. In one embodiment, the endonuclease is a genetically engineered endonuclease from Serratia marcescens that is sold under the name Benzonase(R) (EMD Millipore, US).

In the cation exchange mixed chromatography step, the target small extracellular vesicles are separated from at least one impurity in a sample, whereby the sample comprising the small extracellular vesicles is brought into contact with the chromatography matrix. Contact times are usually in the range from 30 seconds to 24 hours. It is advantageous to work in accordance with the principles of liquid chromatography by passing the liquid through a chromatography column which contains the mixed mode cation exchange chromatography matrix. The liquid can run through the column merely through its gravitational force or be pumped through by means of a pump. An alternative method is batch chromatography, in which the separation material is mixed with the liquid by stirring or shaking for as long as the exosomes need to be able to bind to the chromatography matrix. It is likewise possible to work in accordance with the principles of the chromatographic fluidised bed by introducing the liquid to be separated into, for example, a suspension comprising the chromatography matrix, where the chromatography matrix is selected so that it is suitable for the desired separation owing to its high density and/or a magnetic core.

The chromatographic process is run in the bind and elute mode and the target small extracellular vesicles bind to the chromatography matrix. The chromatography matrix can subsequently be washed with one or more wash buffers, which preferably have the same ion strength and the same pH as the liquid in which the sample is brought into contact with the chromatography matrix. The wash buffer removes substances which do not bind to the chromatography matrix. Further washing steps with other suitable buffers may follow without desorbing the target small extracellular vesicles. The desorption of the bound small extracellular vesicles is carried out by at least changing pH in the eluent. Additionally the ionic strength of the elution buffer and/or the solvents comprised in the elution buffer might be changed compared to the loading conditions. The target small extracellular vesicles can thus be obtained in a purified and concentrated form in the eluent. The target small extracellular vesicles usually have a purity of 70 percent to 99 percent, preferably 85 percent to 99 percent, particularly preferably 90 percent -99 percent, after desorption.

The cation exchange mixed mode material can be used for the purification of small extracellular vesicles enabling an efficient removal of impurities like host cell proteins. Moreover, preferably, the same chromatography step additionally provides for removal of non-target small extracellular vesicles. In a preferred embodiment, the chromatography matrix is a membrane, especially a hydrogel membrane.

The nature of the chromatography matrix used (i.e. strong and/or weak cation exchangers, type of hydrophobic group) and the conditions of salt concentration, buffer used, and pH, will vary depending on the small extracellular vesicles variant selected as target small extracellular vesicles. While the known small extracellular vesicles variants all share features such as size and shape, they differ in fine details of molecular topology and surface charge distribution. Hence, while all small extracellular vesicles variants are expected to be amenable to purification by mixed mode cation exchange chromatography optimal methods can be determined in a systematic manner using chromatography resin and buffer screening experiments, different conditions will be required for each small extracellular vesicles variant to achieve efficient purification. The determination of such conditions is readily apparent to the skilled artisan.

Preferably, the chromatographic purification is performed by using a pH change from 4 - 7 to a pH of 8.5 or more, preferably between 8.5 and 10, most preferred to a pH between pH 8.5 and 9.5 in gradient or step mode while the conductivity is kept at a constant level. The sample that is applied to the chromatograph matrix is adjusted to the pH with which the pH gradient is started.

Suitable buffers to be used are for example: 0.00796 M citric acid, 0.009068 M sodium di-hydrogen phosphate, 0.021543 M glycine, 0.010668 M TRIS, 0.007666 M 4 succinate, 0.0111 M NaOH and 0.2889 M NaCl of pH 4.5 and conductivity of ~24 mS/cm) and the B buffer (e.g., 0.00796 M citric acid, 0.009068 M sodium dihydrogen phosphate, 0.021543 M glycine, 0.010668 M TRIS, 0.007666 M succinate, 0.046 M NaOH and 0.254 M NaCl of pH 8.5 and conductivity of ~24 mS/cm). suitable alternatives are phosphate buffer or tris buffer

It is also possible to perform elution off the chromatographic matrix by combining the linear or step mode pH gradient with a linear or step mode salt gradient. The salt may be selected from the group consisting of: NaCl, KCI, sulfate, formate and acetate; preferably NaCl. Typically, the gradient starts with a low salt concentration e.g. between 10 and 100 mM of salt, which is then increased until elution of the target small extracellular vesicles, e.g. until 250 to 500 mM of salt.

The term "column volume" refers to the volume inside of a packed column not occupied by the chromatography matrix. This volume includes both the interstitial volume (volume outside of the matrix) and the own internal porosity (pore volume) of the matrix.

In a preferred embodiment the applied linear gradient lasts around 60 to 120 column volume (CV) plus optionally an additional hold step at target elution buffer for at least 20 CV.

Target product recovery rates are above 60%, preferably above 80%.

Further, the present invention provides a chromatography based small extracellular versicle purification step which can be regenerated and is applicable in a wide operation window, e.g. pH 3 - 10; conductivity 1 mS/cm - 50 mS/cm.

In a preferred embodiment, the method of the present invention is used to purify samples comprising 10⁹ to 10¹² small extracellular vesicles/ml sample.

The conductivity window span is between 1 mS/cm - 50mS/cm, where in the more preferred embodiment is conductivity range between 2 - 30 mS/cm.

Preferrably, the ionic density of the chromatography matrix is between 10-1200 µeq/g.

The method of the present invention can be applied for all small extracellular vesicles without a need for previous process steps. Preferably, crude cell culture supernatant (nuclease treated and clarified) can be applied directly to the chromatography matrix.

In a very preferred embodiment, a sample, e.g. in form of a crude cell culture supernatant which has been treated with a nuclease like Benzonase ^{®} (Merck GaA, Germany) and has been clarified, is applied to a membrane with cation exchange and hydrophobic groups at a pH between 4.5 and 5.5 and a conductivity around 20 mS and 30 mS. Elution is performed by applying a linear pH gradient from a pH between 4.5 and 5.5 depending on the sample pH to a pH between 8.5 and 10.5 at constant conductivity, e.g. at 150mM Na⁺.

Elution preferably results in at least two fractions. Fraction 1 comprises the majority of process related impurities. Fraction 2 comprises a highly enriched portion of small extracellular vesicles and an impurity log reduction of 2 to 3 log. Very preferred elution results in at least two fractions comprising different subpopulations of small extracellular vesicles.

The preferred buffer composition is a buffer with a wide pH range from 4 to 11, e.g., but not limited to, the Good buffer system containing tris, phosphate and acetate as well as amino acids.

With the method of the present invention, small extracellular vesicles can be purified efficiently. Typically, contaminants, even DNA, can be reduced with a log reduction of 2 log or more. Preferably, the method achieves a host cell protein and DNA reduction of more than 2 log. In addition, different small extracellular vesicles populations can be separated based on their glycosylation rate, glycosylation pattern, surface protein pattern and/or cargo, preferably based on their glycosylation rate and glycosylation pattern. Thus, process- and product-related impurities can be removed in one single step.

The present invention is further illustrated by the following figures and examples, however, without being restricted thereto.

### Examples

HEK 293T cells were grown for 24 hrs in T-75 culture flasks in a total of 20 ml DMEM prepared with L-Glutamine and without FBS. The cell supernatant was used to isolate EVs. The media was first centrifuged at 300 x g for 10 minutes to remove any cells. The supernatant was then transferred to a clean tube and centrifuged again at 2,000 x g for 15 minutes to remove other debris. At this point the media was concentrated down to 3 ml by centrifuging at 1000 x g for 10 minutes using a 100 kDa MWCO ultrafiltration device (Amicon^{®} Ultra-15, Millipore). A buffer exchange with buffer A (Table 1) was performed centrifuging again 3 times at 1000 x g for 10 minutes using a 100 kDa MWCO ultrafiltration device. Before the chromatographic separation the conditioned media was filtered through a 0.22 µ m filter (Millipore).

For the chromatographic bind and elute separation on Eshmuno^{®} CMX buffers shown in Table 1 and 2 was used. Table 3 summarizes the method using the Äkta^{™} system.

**Table 1: Buffer A (pH 5)**

| Chemical | Concentration [mol/L] |
|---|---|
| Citric acid monohydrate | 0.00796 |
| Sodium dihydrogen phosphate monohydrate | 0.009068 |
| Glycine | 0.021543 |
| TRIS | 0.010668 |
| di-Sodium succinate | 0.007666 |
| NaOH 32% | 0.0111 |
| NaCl | 0.2889 |

**Table 2: Buffer B (pH 8.5)**

| Chemical | Concentration [mol/L] |
|---|---|
| Citric acid monohydrate | 0.00796 |
| Sodium dihydrogen phosphate monohydrate | 0.009068 |
| Glycine | 0.021543 |
| TRIS | 0.010668 |
| di-Sodium succinate | 0.007666 |
| NaOH 32% | 0.046 |
| NaCl | 0.254 |

**Table 3: Chromatographic steps**

| Step | Solution | Volume |
|---|---|---|
| Equilibration | 100% buffer A | 10 CV |
| Sample application | Conditioned cell culture supernatant | 15 CV |
| Wash | 100% buffer | 10 CV |
| Gradient elution | 0 - 100% buffer B | 60 CV |
| Elution | 100% buffer B | 5 CV |
| CIP | 1 M NaOH | 6 CV |
| Re-equilibration | 100% buffer A | 10 CV |

The packed column with Eshmuno^{®} CMX was equilibrated with at least 10 CV using buffer A. 15 CV of conditioned cell supernatant were applied onto the column. To elute any weakly bound impurities before the gradient elution, a 10 CV wash step with buffer A was performed. Then, the exosomes were eluted in a linear pH gradient, in 60 CV. In order to elute tightly bound proteins, vesicles or other impurities, the column was cleaned with 6 CV of 1 M sodium hydroxide solution followed by a re-equilibration with buffer A. The elution was fractionated into 0.5 mL fractions.

## Claims

1. A method for purifying small extracellular vesicles comprising the steps of
a) contacting the sample comprising the small extracellular vesicles with a mixed mode cation exchange chromatography matrix comprising cation exchange groups and hydrophobic groups
b) optionally washing the chromatography matrix
c) eluting small extracellular vesicles which bound to the chromatography matrix in step a) with an elution buffer, whereby the pH of the elution buffer is raised stepwise or as a linear gradient from a pH between 4 and 7 to a pH of 8.5 or more.

2. Method according to claim 1 whereby the pH of the elution buffer is raised as a linear gradient.

3. Method according to one or more of claims 1 to 2, whereby the method includes recovering small extracellular vesicles which flow through the chromatography matrix without binding to it.

4. Method according to one or more of claims 1 to 3, whereby the chromatography matrix is a membrane or a monolith.

5. Method according to one or more of claims 1 to 4, whereby the chromatography matrix is a hydrogel membrane.

6. Method according to one or more of claims 1 to 5, whereby conductivity of the elution buffer is kept at a constant level.

7. Method according to one or more of claims 1 to 6, whereby elution in step c) is performed with a linear pH gradient from a pH between 4 and 7 to a pH of 8.5 more and two or more fractions are eluted in different pH ranges comprising different subpopulations of small extracellular vesicles.

8. Method according to one or more of claims 1 to 7, whereby the small extracellular versicles are exosomes.

9. A method for purifying small extracellular versicles from a cell culture supernatant by purifying the small extracellular versicles according to the method of one or more of claims 1 to 8.

10. Method according to claim 7 or 9, whereby the method comprises one or more of the following steps:
- Clarification
- filtration
- dialysis/ diafiltration
- tangential flow filtration
- treatment with nuclease, e.g. RNase and/or DNase
- treatment with chloroform
- ion exchange chromatography
- affinity chromatography
- hydrophobic interaction chromatography
- centrifugation
- PEG precipitation

## Patentansprüche

1. Verfahren zur Reinigung kleiner extrazellulärer Vesikel, umfassend die Schritte
a) Inkontaktbringen der Probe, die die kleinen extrazellulären Vesikel enthält, mit einer Mixed Mode-Kationenaustauschchromatographie-Matrix, die Kationenaustauschgruppen und hydrophobe Gruppen enthält
b) gegebenenfalls Waschen der Chromatographiematrix
c) Eluieren der kleinen extrazellulären Vesikel, die in Schritt a) an die Chromatographiematrix banden, mit einem Elutionspuffer, wobei der pH-Wert des Elutionspuffers schrittweise oder als linearer Gradient von einem pH-Wert zwischen 4 und 7 auf einen pH-Wert von 8,5 oder mehr erhöht wird.

2. Verfahren nach Anspruch 1, wobei der pH-Wert des Elutionspuffers als linearer Gradient erhöht wird.

3. Verfahren nach einem oder mehreren der Ansprüche 1 bis 2, wobei das Verfahren die Rückgewinnung kleiner extrazellulärer Vesikel, die durch die Chromatographiematrix fließen, ohne daran zu binden, beinhaltet.

4. Verfahren nach einem oder mehreren der Ansprüche 1 bis 3, wobei die Chromatographiematrix eine Membran oder ein Monolith ist.

5. Verfahren nach einem oder mehreren der Ansprüche 1 bis 4, wobei die Chromatographiematrix eine Hydrogel-Membran ist.

6. Verfahren nach einem oder mehreren der Ansprüche 1 bis 5, wobei die Leitfähigkeit des Elutionspuffers auf einem konstanten Niveau gehalten wird.

7. Verfahren nach einem oder mehreren der Ansprüche 1 bis 6, wobei die Elution in Schritt c) mit einem linearen pH-Gradienten von einem pH-Wert zwischen 4 und 7 bis auf einen pH-Wert von 8,5 oder mehr durchgeführt wird und zwei oder mehr Fraktionen in verschiedenen pH-Bereichen eluiert werden, die verschiedene Subpopulationen kleiner extrazellulärer Vesikel umfassen.

8. Verfahren nach einem oder mehreren der Ansprüche 1 bis 7, wobei die kleinen extrazellulären Vesikel Exosomen sind.

9. Verfahren zur Reinigung kleiner extrazellulärer Vesikel aus einem Zellkulturüberstand durch Reinigung der kleinen extrazellulären Vesikel gemäß dem Verfahren nach einem oder mehreren der Ansprüche 1 bis 8.

10. Verfahren nach Anspruch 7 oder 9, wobei das Verfahren einen oder mehrere der folgenden Schritte umfasst:
- Klären
- Filtration
- Dialyse/Diafiltration
- Tangentialflussfiltration
- Behandlung mit Nuklease, z.B. RNase und/oder DNase
- Behandlung mit Chloroform
- Ionenaustauschchromatographie
- Affinitätschromatographie
- hydrophobe Interaktionschromatographie
- Zentrifugation
- PEG-Fällung

## Revendications

1. Méthode de purification de petites vésicules extracellulaires, comprenant les étapes
a) de mise en contact de l'échantillon comprenant les petites vésicules extracellulaires avec une matrice de chromatographie d'échange de cations à mode mixte comprenant des groupements d'échange de cations et des groupements hydrophobes
b) éventuellement, de lavage de la matrice de chromatographie
c) d'élution des petites vésicules extracellulaires qui se sont liées à la matrice de chromatographie dans l'étape a) avec un tampon d'élution, le pH du tampon d'élution étant augmenté par paliers ou selon un gradient linéaire allant d'un pH compris entre 4 et 7 à un pH de 8,5 ou plus.

2. Méthode selon la revendication 1, dans laquelle le pH du tampon d'élution est augmenté selon un gradient linéaire.

3. Méthode selon l'une ou plusieurs parmi les revendications 1 à 2, la méthode comprenant la récupération de petites vésicules extracellulaires qui s'écoulent à travers la matrice de chromatographie sans s'y lier.

4. Méthode selon l'une ou plusieurs parmi les revendications 1 à 3, dans laquelle la matrice de chromatographie est une membrane ou un monolithe.

5. Méthode selon l'une ou plusieurs parmi les revendications 1 à 4, dans laquelle la matrice de chromatographie est une membrane hydrogel.

6. Méthode selon l'une ou plusieurs parmi les revendications 1 à 5, dans laquelle la conductivité du tampon d'élution est maintenue à un niveau constant.

7. Méthode selon l'une ou plusieurs parmi les revendications 1 à 6, dans laquelle l'élution dans l'étape c) est réalisée selon un gradient de pH linéaire allant d'un pH compris entre 4 et 7 à un pH de 8,5 ou plus, et deux, ou plus, fractions sont éluées dans différentes plages de pH comprenant différentes sous-populations de petites vésicules extracellulaires.

8. Méthode selon l'une ou plusieurs parmi les revendications 1 à 7, dans laquelle les petites vésicules extracellulaires sont des exosomes.

9. Méthode de purification de petites vésicules extracellulaires à partir d'un surnageant de culture cellulaire par la purification des petites vésicules extracellulaires selon la méthode selon l'une ou plusieurs parmi les revendications 1 à 8.

10. Méthode selon la revendication 7 ou 9, la méthode comprenant une ou plusieurs parmi les étapes suivantes :
- clarification
- filtration
- dialyse/diafiltration
- filtration à flux tangentiel
- traitement par une nucléase, par exemple une ARNase et/ou une ADNase
- traitement par du chloroforme
- chromatographie d'échange d'ions
- chromatographie d'affinité
- chromatographie d'interaction hydrophobe
- centrifugation
- précipitation au PEG
